# EUROPÄISCHE PATENTSCHRIFT

(11) **EP 2 222 522 B1**
(45) Veröffentlichungstag und Bekanntmachung des Hinweises auf die Patenterteilung: **14.11.2012**
(21) Anmeldenummer: 08851692.7
(22) Anmeldetag: 23.09.2008
(51) Int. Cl.: B60S 1/38

(54) **WISCHBLATT**
WIPER BLADE
RACLETTE D'ESSUIE-GLACE

(30) Priorität: 22.11.2007 DE 102007056321
(43) Veröffentlichungstag der Anmeldung: 01.09.2010
(73) Patentinhaber: Robert Bosch GmbH, 70442 Stuttgart (DE)
(72) Erfinder: RITT, Jean-Marc, F-67000 Strasbourg (FR)
(86) Internationale Anmeldenummer: PCT/EP2008/062687
(87) Internationale Veröffentlichungsnummer: WO 2009/065648

(56) Entgegenhaltungen:
- WO-A-2008/046691
- WO-A-2009/000498
- DE-A1- 10 120 467
- DE-A1- 19 835 065
- DE-A1-102006 020 524
- DE-B- 1 099 375
- US-A1- 2007 174 989

## Beschreibung

### Stand der Technik

Die Erfindung geht von einem Wischblatt nach dem Oberbegriff des Anspruchs 1 aus.

Aus der DE 19835065 A1 ist ein gattungsgemäßes Wischblatt bekannt, das eine Wischleiste mit mindestens einer lang gestreckten, im Ausgangszustand zu einer Wischlippe hin konkav vorgekrümmten Federschiene als Tragelement aufweist. Das Tragelement ist in einem Hohlprofil der Kopfleiste der Wischleiste untergebracht, das zur Seite, die der Wischlippe abgewandt ist, durch einen Längsspalt offen ist. Der Längsspalt wird durch die oberen Schenkel von Führungsprofilen gebildet, die einander zugewandte Nuten aufweisen, in denen die Federschiene eingebettet ist. Im mittleren Bereich des Wischblatts ist auf der der Wischlippe abgewandten Seite des Tragelements ein Anschlusselement befestigt. Dieses ruht mit seinem flachen Boden auf dem Hohlprofil, während aus seinen etwa senkrecht zum Boden in entgegengesetzter Richtung zur Wischlippe verlaufende Seitenwände Laschen ausgeschert sind, die krallenförmig um das Hohlprofil mit dem Tragelement gebogen sind und das Anschlusselement gegen das Hohlprofil und das Tragelement pressen.

Ferner ist aus der DE 102006020524 A1 ein Wischblatt mit mindestens einer Federschiene bekannt, die in einem am Umfang geschlossenen Längskanal einer Kopfleiste untergebracht ist. Der Längskanal wird von Führungsprofilen eines Spoilers an den Längsseiten umfasst.

Ferner ist aus der DE 10 2005 009 205 A1 ein Wischblatt bekannt, das eine Wischleiste, einen Spoiler und eine einzige lang gestreckte, im Ausgangszustand zu einer Fahrzeugscheibe hin konkav vorgekrümmte Federschiene als Tragelement aufweist. Die Federschiene ist zwischen einer Kopfleiste der Wischleiste und dem Spoiler angeordnet. Sie ist mittels eines Halteprofils mit der Wischleiste verbunden, das die Federschiene umgibt und seitlich in Längsnuten der Kopfleiste eingreift. Auf dem Halteprofil sitzt seinerseits der Spoiler, der das Halteprofil seitlich und von der Seite, die der Fahrzeugscheibe zugewandt ist, ein Stück weit umfasst. Im mittleren Bereich ist ein Anschlusselement zum gelenkigen Verbinden mit einem Wischarm angeordnet, an dessen Seitenwänden ein Gelenkteil, entweder eine Gelenknabe oder eine Gelenkachse, befestigt ist.

Aus der US 31 92 551 ist ein Wischblatt bekannt, das als - Tragelement eine einzige, lang gestreckte, flache Federschiene besitzt, die an einem Rücken einer Kopfleiste einer Wischleiste angeklebt ist. Das Wischblatt besitzt im mittleren Bereich ein Anschlusselement, das an der Federschiene durch Niete befestigt ist.

Schließlich ist aus der DE 28 43 164 A1 ein Wischblatt mit einer einzigen Federschiene als Tragelement bekannt, die im mittleren Bereich zwischen zwei Seitenteilen eine über die Längserstreckung verlaufende Sicke, bzw. einen Vorsprung, aufweist, der im Querschnitt dachförmig ist und sich von der Mitte aus zu den Enden hin verjüngt.

### Offenbarung der Erfindung

Die Kopfleiste der Wischleiste besitzt ein auf einer einer Wischlippe abgewandten Seite offenes Hohlprofil, an dessen Längsseiten Führungsprofile angeordnet sind, die einander zugewandte, offene Nuten aufweisen, in denen die Federschiene eingebettet ist. Somit ergibt sich ein einfaches, durch Extrusion herstellbares Profil für die Wischleiste, wobei die Führungsprofile aus einem anderen Werkstoff bestehen können als die übrigen Teile der Wischleiste und in einem einzigen Arbeitsgang anextrudiert werden können. Nach der Erfindung besitzen die Führungsprofile an ihren äußeren Längsseiten Rippen, auf denen ein Spoiler mit Gegenprofilen geführt und gehalten ist. Die Anordnung der Rippen und Gegenprofile kann auch vertauscht werden, sodass die Rippen an dem Spoiler und die Gegenprofile an den Führungsprofilen vorgesehen sind. Zur besseren Verbindung der Rippen mit den Gegenprofilen besitzen die Rippen an ihren Außenkanten zweckmäßigerweise Verdickungen, die in Nuten mit Hinterschneidungen der Gegenprofile passen. Der Spoiler kann leicht und sicher auf die Gegenprofile geklippst werden, sodass die Federschiene einerseits von der Wischleiste und andererseits von dem Spoiler abgedeckt und geschützt ist. Sie braucht daher keine Lackierung.

Nach einer Ausgestaltung der Erfindung weist die Kopfleiste zwischen den Führungsprofilen einerseits und einem Kippsteg andererseits ein Verbindungsteil mit einem u-förmigen, zur Federschiene offenen Querschnitt auf. Durch die Gestaltung des Verbindungsteils kann die Nachgiebigkeit der Kopfleiste in Richtung des unbelasteten Kippstegs modifiziert werden, sodass der Umlegevorgang der Wischlippe in den Umkehrphasen des Wischblatts keine oder nur geringe Hubbewegungen erzeugt, die zu Geräuschen führen könnten.

Nach einer weiteren Ausgestaltung der Erfindung besitzt der Spoiler eine innere Verstärkungswand, die einen Bereich an der Abströmseite in der Nähe des Gegenprofils mit einem Bereich nahe dem gegenüberliegenden Gegenprofil verbindet. Die Verstärkungswand verleiht dem Spoiler und damit dem Wischblatt eine sehr gute Seitenstabilität. Außerdem sichert sie die Verbindung zwischen den Rippen und deren Gegenprofilen.

Nach einer weiteren Ausgestaltung der Erfindung besitzt das Anschlusselement einen Boden mit zwei Seitenwänden zur Aufnahme des Gelenkteils, z.B. einer Gelenknabe oder einer Gelenkachse. Der Boden weist einen flachen Bereich auf, der mittig zwischen den Seitenwänden verläuft und zu der Federschiene vorsteht. Der vorstehende Bereich liegt im montierten Zustand an der Federschiene an und ist mit dieser durch Einfasen, Nieten, Schrauben, Schweißen oder Kleben verbunden. Durch den vorstehenden Bereich ergibt sich an den Längsseiten des Bodens zur Federschiene hin ein Freiraum für die Führungsprofile der Wischleiste, sodass diese sich ohne Einschnitte über die gesamte Länge des Wischblatts erstrecken können. Ferner hat die Verbindung durch Einfasen oder Nieten den Vorteil, dass die durch die Wischleiste bzw. den Spoiler geschützten Bauteile nicht lackiert zu werden brauchen.

Durch das Einfasen bzw. Nieten sind in der Federschiene Löcher erforderlich, die die Festigkeit und Elastizität der Federschienen in diesem Querschnitt beeinflussen. Dieser Einfluss kann durch Seitenränder der Federschiene kompensiert werden, die quer zu dem übrigen Teil abgewinkelt sind und mindestens im Bereich des Anschlusselements vorgesehen werden. Zur Modifizierung der Federeigenschaften der Federschienen können die Ränder jedoch über die gesamte Länge der Federschiene verlaufen und zu den Enden hin in der Höhe abnehmen.

Ein ähnlicher Effekt lässt sich dadurch erzielen, dass die Federschiene Seitenteile besitzt, die in einer Ebene parallel zum Lagerteil liegen, während ein flaches Mittelteil vorsteht, vorzugsweise zum Anschlusselement hin. Das zum Anschlusselement vorstehende Mittelteil liegt an dem Boden bzw. dem vorstehenden Bereich des Anschlusselements an. Wenn die Federschiene ein flaches, zum Anschlusselement vorstehendes Mittelteil aufweist, kann der vorstehende Bereich des Anschlusselements entfallen, sodass der Boden des Anschlusselements durchgehend eben ist.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

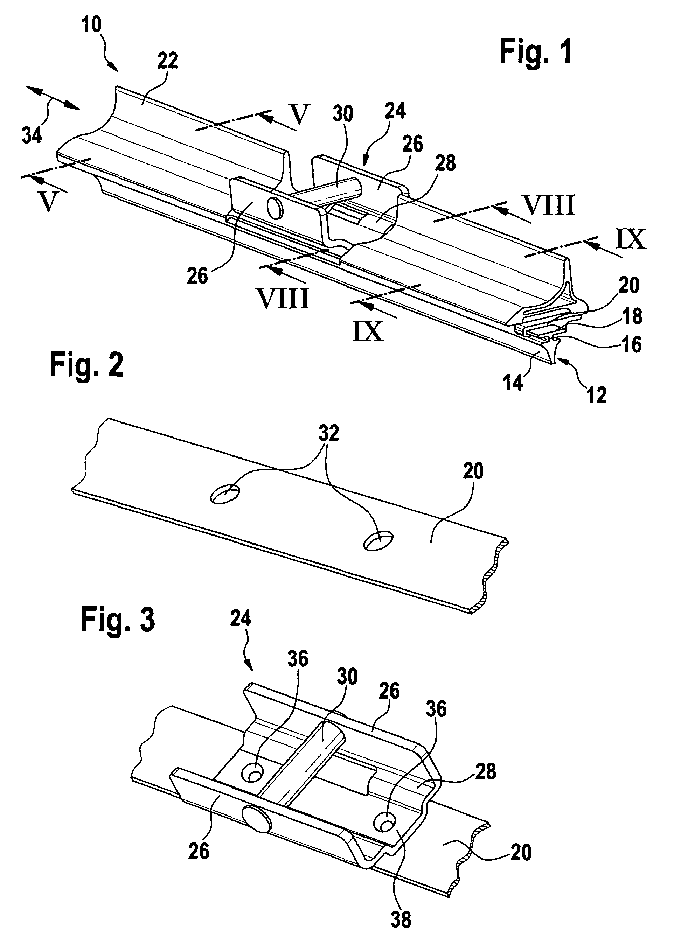

- Fig. 1: eine perspektivische Teilansicht eines erfindungsgemäßen Wischblatts,
- Fig. 2: eine Teilansicht einer Federschiene,
- Fig. 3: eine perspektivische Teilansicht einer Federschiene mit einem Anschlusselement,

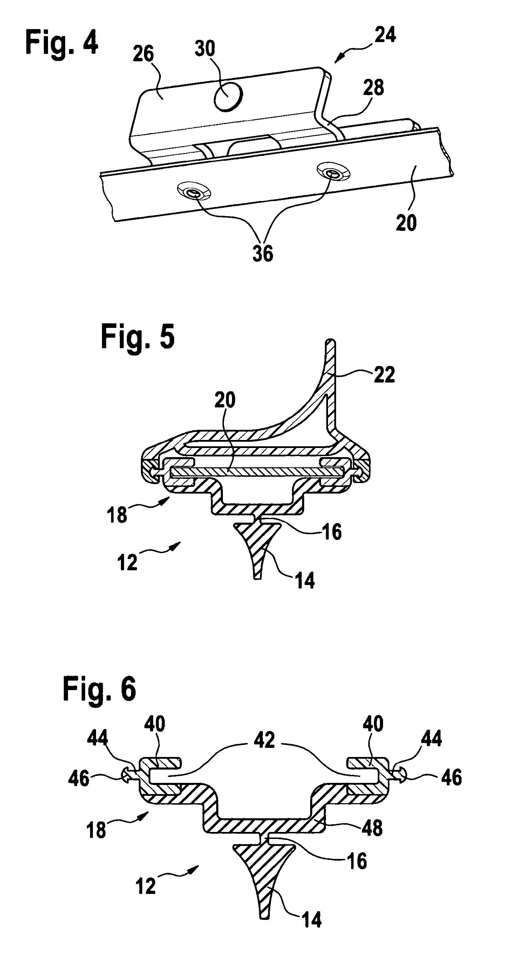

- Fig. 4: eine perspektivische Teilansicht nach Fig. 3 von unten,
- Fig. 5: einen Querschnitt eines Wischblatts entsprechend der Linie V-V nach Fig. 1,
- Fig. 6: einen Querschnitt einer Wischleiste,

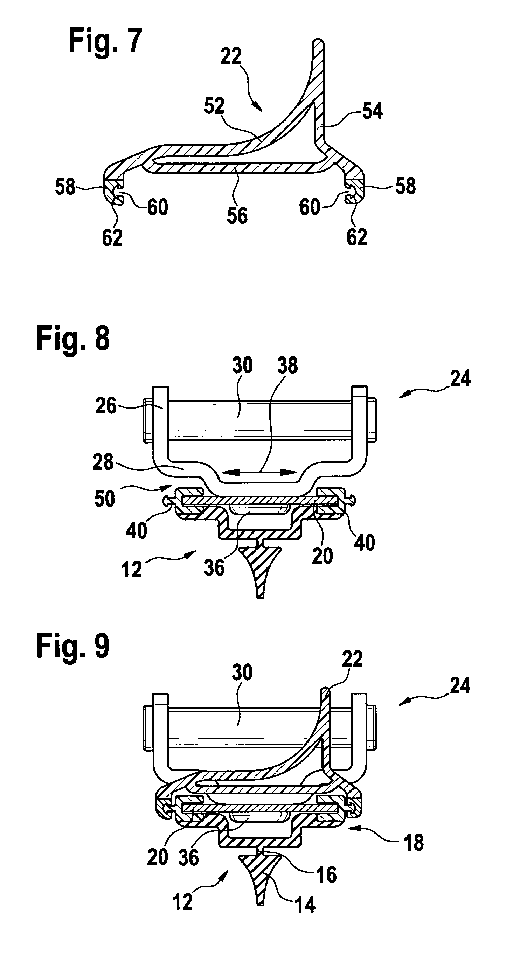

- Fig. 7: einen Querschnitt eines Spoilers,
- Fig. 8: einen Querschnitt eines Wischblatts entsprechend der Linie VIII-VIII in Fig. 1,
- Fig. 9: eine Ansicht eines Wischblatts in Richtung eines Pfeils IX,

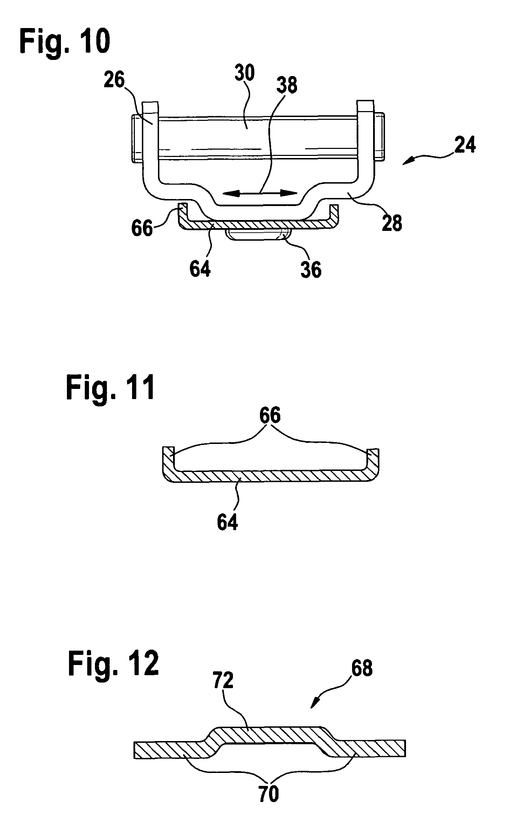

- Fig. 10: einen Querschnitt eines Anschlusselements mit einer alternativen Federschiene,
- Fig. 11: einen Querschnitt einer Federschiene nach Fig. 10 und
- Fig. 12: eine Variante zu Fig. 11.

### Ausführungsformen der Erfindung

Ein Wischblatt 10 besitzt eine Wischleiste 12 mit einer Wischlippe 14, die über einen Kippsteg 16 mit einer Kopfleiste 18 verbunden ist. Diese weist ein hohles Querschnittprofil auf, das zu der der Wischlippe 14 abgewandten Seite hin offen ist. An den Längsseiten der Kopfleiste 18 befinden sich im Bereich der offenen Seite Führungsprofile 40 mit Längsnuten 42, die einander zugewandt sind und in denen eine Federschiene 20 eingebettet ist. Die Führungsprofile 40, die aus dem gleichen Werkstoff bestehen können wie die übrige Wischleiste 12, sind dem gezeigten Ausführungsbeispiel aus einem anderen, für die Führungsaufgaben geeigneteren Werkstoff hergestellt und in einem Extrusionsverfahren mit der übrigen Wischleiste 12 in einem Arbeitsgang hergestellt.

An den Längsseiten besitzen die Führungsprofile 40 Rippen 44. Sie dienen zur Befestigung eines Spoilers 22, der mit Gegenprofilen 58 an seinen Längsseiten über die Rippen 44 geklippst oder geschoben wird. Hierzu haben die Gegenprofile 58 einander zugewandte Nuten 60, in die die Rippen 44 eingreifen. Um eine stärkere Verbindung zwischen den Nuten 60 und den Rippen 44 zu erhalten, weisen diese an ihren Außenseiten Verdickungen 46 auf, die in Hinterschneidungen 62 der Nuten 60 passen. Zwischen den Führungsprofilen 40 einerseits und dem Kippsteg 16 andererseits weist die Kopfleiste 18 ein Verbindungsteil 48 auf, das ein zur Federschiene 20 offenes, u-förmiges Querschnittprofil hat.

Der Spoiler 22 besitzt ein dem Fahrtwind zugewandtes Anströmprofil 52, das an seiner der Wischleiste 12 abgewandten Kante mit einer Abströmseite 54 verbunden ist. Ferner besteht eine Verbindung über eine Verstärkungswand 56, die sich auf der Innenseite des Spoilers 22 quer durch das Querschnittprofil erstreckt, und zwar von einem Bereich nahe dem Gegenprofil 58 auf der Abströmseite 54 zum Bereich nahe dem gegenüberliegenden Gegenprofil 58.

Zum gelenkigen Verbinden mit einem nicht dargestellten Wischarm besitzt das Wischblatt 10 in einem mittleren Bereich ein Anschlusselement 24, das ausgehend von einem Boden 28 zwei etwa rechtwinklig abgewinkelte Seitenwände 26 besitzt. Diese verlaufen in Längsrichtung 34 und sind durch ein Gelenkteil 30 in Form einer Gelenknabe oder einer Gelenkachse miteinander verbunden. Der Boden 28 des Anschlusselements 24 ist durch Niete 36 an der Federschiene 20 befestigt. Diese hat hierzu entsprechende Nietlöcher 32. Die Verbindung kann auch durch Einfasen hergestellt werden. Dabei wird ein Teil des Bodenmaterials durch die Nietlöcher 32 der Federschiene 20 gedrückt und auf der anderen Seite der Federschiene 20 nach außen umgebördelt.

Zweckmäßigerweise besitzt der Boden 28 im Bereich der Befestigung einen Bereich 38, der gegenüber dem übrigen Bereich des Bodens 28 zur Federschiene 20 hin vorsteht, sodass zwischen der Federschiene 20 und dem übrigen Bereich 38 des Bodens ein Freiraum 50 entsteht. Dieser ermöglicht die Montage einer durchgehenden, einschnittfreien Wischleiste 12.

Durch die Nietlöcher 32 werden das elastische Verhalten und die Festigkeit der Federschiene 20 in diesem Bereich beeinflusst. Zum Ausgleich dieser Faktoren kann eine Federschiene 64 im Bereich des Anschlusselements 24 seitliche Ränder 66 aufweisen, die sich nur über die Länge des Bereichs des Anschlusselements 24 oder über die gesamte Länge der Federschiene 20 erstrecken, wobei ihre Höhe zu den Enden der Federschiene 64 abnehmen kann. Bei einer weiteren Ausführung besitzt eine Federschiene 68 zwei Seitenteile 70, die in einer Ebene liegen und sich an ein Mittelteil 72 anschließen, das vorzugsweise zum Anschlusselement 24 vorsteht. Durch den Versatz zwischen Seitenteilen 70 und dem Mittelteil 72 kann der Freiraum 50 zwischen den Seitenteilen 70 und dem Boden 28 des Anschlusselements 24 ganz oder teilweise gebildet werden.

## Patentansprüche

1. Wischblatt (10) in Flachbalkenbauweise mit einer Wischleiste (12), die eine Kopfleiste (18) mit einem auf einer Wischlippe (14) abgewandten Seite offenen Hohlprofil besitzt, an dessen Längsseiten Führungsprofile (40) angeordnet sind, die einander zugewandte offene Nuten (42) aufweisen, in denen eine einzige als Tragelement dienende Federschiene (20, 64, 68) eingebettet ist, wobei im mittleren Bereich des Wischblatts (10) ein Anschlusselement (24) mit einem Gelenkteil (30) angeordnet ist, **dadurch gekennzeichnet, dass** die Führungsprofile (40) an ihren äußeren Längsseiten Rippen (44) besitzen, auf denen ein Spoiler (22) mit Gegenprofilen (58) geführt und gehalten ist.

2. Wischblatt (10) nach Anspruch 1, **dadurch gekennzeichnet, dass** die Rippen (44) an ihren Außenkanten Verdickungen (46) besitzen, die in Nuten (60) mit Hinterschneidungen (62) der Gegenprofile (58) passen.

3. Wischblatt (10) nach einem der vorhergehenden Ansprüche, **dadurch gekennzeichnet, dass** die Führungsprofile (40) oder die Gegenprofile (58) aus einem anderen Kunststoff als die zugehörigen Bauteile (12, 22), nämlich die Wischleiste (12) und der Spoiler (22), bestehen und mit diesen zusammen in einem Extrusionsverfahren hergestellt sind.

4. Wischblatt (10) nach einem der vorhergehenden Ansprüche, **dadurch gekennzeichnet, dass** die Kopfleiste (18) zwischen den Führungsprofilen (40) einerseits und einem Kippsteg (16) andererseits ein Verbindungsteil (48) mit einem u-förmigen, zur Federschiene (20, 64, 68) offenen Querschnitt aufweist.

5. Wischblatt (10) nach einem der vorhergehenden Ansprüche, **dadurch gekennzeichnet, dass** der Spoiler (22) eine innere Verstärkungswand (56) besitzt, die einen Bereich an der Abströmseite (54) in der Nähe des Gegenprofils (58) mit einem Bereich nahe dem gegenüberliegenden Gegenprofil (58) verbindet.

6. Wischblatt (10) nach einem der vorhergehenden Ansprüche, **dadurch gekennzeichnet, dass** das Anschlusselement (24) einen Boden (28) mit zwei Seitenwänden (26) zur Aufnahme eines Gelenkteils (30) besitzt, wobei der Boden (28) einen flachen Bereich (38) aufweist, der etwa mittig zwischen den Seitenwänden (26) verläuft und zu der Federschiene (20, 64, 68) vorsteht, mit der er durch Einfasen, Nieten, Schrauben, Schweißen oder Kleben verbunden ist.

7. Wischblatt (10) nach einem der vorhergehenden Ansprüche, **dadurch gekennzeichnet, dass** die Federschiene (64) mindestens im Bereich des Anschlusselements (24) Seitenränder (66) hat, die quer zu dem übrigen Teil abgewinkelt sind.

8. Wischblatt (10) nach einem der Ansprüche 1 bis 6, **dadurch gekennzeichnet, dass** die Federschiene (68) zwei Seitenteile (70) besitzt, die in einer Ebene parallel zum Lagerteil (30) liegen, während ein flaches Mittelteil (72), vorzugsweise zum Anschlusselement (24), vorsteht.

## Claims

1. Wiper blade (10) of flat arc construction with a wiper strip (12) which has a head strip (18) with a hollow profile which is open on a side facing away from a wiper lip (14) and on the longitudinal side of which guide profiles (40) are arranged, said guide profiles having mutually facing open grooves (42), in which a single spring rail (20, 64, 68) serving as a supporting element is embedded, wherein a connecting element (24) with an articulation part (30) is arranged in the central region of the wiper blade (10), **characterized in that** the outer longitudinal sides of the guide profiles (40) have ribs (44), on which a spoiler (22) with mating profiles (58) is guided and held.

2. Wiper blade (10) according to Claim 1, **characterized in that** the outer edges of the ribs (44) have thickened portions (46) which fit into grooves (60) having undercuts (62) in the mating profiles (58).

3. Wiper blade (10) according to either of the preceding claims, **characterized in that** the guide profiles (40) or the mating profiles (58) are composed of a different plastic than the associated components (12, 22), namely the wiper strip (12) and the spoiler (22), and are produced together therewith in an extrusion process.

4. Wiper blade (10) according to one of the preceding claims, **characterized in that** the head strip (18) has a connection part (48) having a U-shaped cross section, which is open with respect to the guide rail (20, 64, 68), between the guide profiles (40), on the one hand, and a tilting web (16), on the other hand.

5. Wiper blade (10) according to one of the preceding claims, **characterized in that** the spoiler (22) has an inner reinforcing wall (56) which connects a region on the outflow side (54) in the vicinity of the mating profile (58) to a region in the vicinity of the opposite mating profile (58).

6. Wiper blade (10) according to one of the preceding claims, **characterized in that** the connecting element (24) has a base (28) with two side walls (26) for receiving an articulation part (30), wherein the base (28) has a flat region (38) which runs approximately centrally between the side walls (26) and projects towards the spring rail (20, 64, 68), to which said base is connected by bevelled insetting, riveting, screwing, welding or adhesive bonding.

7. Wiper blade (10) according to one of the preceding claims, **characterized in that** the spring rail (64), at least in the region of the connecting element (24), has side edges (66) which are angled transversely with respect to the remaining part.

8. Wiper blade (10) according to one of Claims 1 to 6, **characterized in that** the spring rail (68) has two side parts (70) which lie in a plane parallel to the bearing part (30) while a flat central part (72) projects, preferably towards the connecting element (24).

## Revendications

1. Balai d'essuie-glace (10) de construction à barre plate, comprenant une raclette de balai d'essuie-glace (12) qui possède une raclette de tête (18) dotée d'un profilé creux ouvert sur un côté opposé à une lèvre de balai d'essuie-glace (14), sur les côtés longitudinaux duquel profilé creux sont disposés des profilés de guidage (40) qui comprennent des rainures ouvertes (42) se faisant face, dans lesquelles est encastré un unique rail élastique (20, 64, 68) servant d'élément de support, un élément de raccordement (24) doté d'une partie d'articulation (30) étant disposé dans la région centrale du balai d'essuie-glace (10), **caractérisé en ce que** les profilés de guidage (40) possèdent des nervures (44) sur leurs côtés longitudinaux extérieurs, sur lesquelles est guidé et maintenu un déflecteur (22) doté de profilés conjugués (58).

2. Balai d'essuie-glace (10) selon la revendication 1, **caractérisé en ce que** les nervures (44) possèdent sur leurs bords extérieurs des épaississements (46) qui s'ajustent dans des rainures (60) dotées de contre-dépouilles (62) des profilés conjugués (58).

3. Balai d'essuie-glace (10) selon l'une quelconque des revendications précédentes, **caractérisé en ce que** les profilés de guidage (40) ou les profilés conjugués (58) sont composés d'un autre plastique que celui des pièces structurales associées (12, 22), à savoir la raclette de balai d'essuie-glace (12) et le déflecteur (22), et sont fabriqués conjointement avec celles-ci au moyen d'un procédé d'extrusion.

4. Balai d'essuie-glace (10) selon l'une quelconque des revendications précédentes, **caractérisé en ce que** la raclette de tête (18) comprend, entre les profilés de guidage (40) d'une part et un élément jointif basculant (16) d'autre part, une partie de liaison (48) présentant une section transversale en forme de U ouverte en direction du rail élastique (20, 64, 68).

5. Balai d'essuie-glace (10) selon l'une quelconque des revendications précédentes, **caractérisé en ce que** le déflecteur (22) possède une paroi de renforcement intérieure (56) qui relie une région au niveau du côté aval (54) à proximité du profilé conjugué (58) à une région près du profilé conjugué opposé (58).

6. Balai d'essuie-glace (10) selon l'une quelconque des revendications précédentes, **caractérisé en ce que** l'élément de raccordement (24) possède un fond (28) doté de deux parois latérales (26) pour recevoir une partie d'articulation (30), le fond (28) comprenant une région plane (38) qui s'étend approximativement de manière centrale entre les parois latérales (26) et qui fait saillie en direction du rail élastique (20, 64, 68) auquel il est relié par sertissage, rivetage, vissage, soudage ou collage.

7. Balai d'essuie-glace (10) selon l'une quelconque des revendications précédentes, **caractérisé en ce que** le rail élastique (64) possède des bords latéraux (66) au moins dans la région de l'élément de raccordement (24), lesquels bords latéraux sont courbés transversalement à la partie restante.

8. Balai d'essuie-glace (10) selon l'une quelconque des revendications 1 à 6, **caractérisé en ce que** le rail élastique (68) possède deux parties latérales (70) qui se situent dans un plan parallèle à la partie de palier (30), tandis qu'une partie centrale plane (72) fait saillie, de préférence en direction de l'élément de raccordement (24).
